**Europäisches Patentamt**

**European Patent Office**

**Office européen des brevets**

(19)

(11) Veröffentlichungsnummer: **0 190 178**
**B1**

(12) # EUROPÄISCHE PATENTSCHRIFT

(45) Veröffentlichungstag der Patentschrift:
21.06.89

(21) Anmeldenummer: 85903270.8

(22) Anmeldetag: 03.07.85

(86) Internationale Anmeldenummer:
PCT/EP 85/00319

(87) Internationale Veröffentlichungsnummer:
WO 86/00987 (13.02.86 Gazette 86/04)

(51) Int. Cl.⁴: **G 01 F 11/26,** B 22 D 11/16,
**G 01 F 23/26**

(54) **EINRICHTUNG ZUR ELEKTROMAGNETISCHEN FÜLLSTANDSMESSUNG FÜR METALLURGISCHE GEFÄSSE.**

(30) Priorität: 26.07.84 DE 3427563

(43) Veröffentlichungstag der Anmeldung:
13.08.86 Patentblatt 86/33

(45) Bekanntmachung des Hinweises auf die Patenterteilung:
21.06.89 Patentblatt 89/25

(84) Benannte Vertragsstaaten:
AT CH FR GB IT LI SE

(56) Entgegenhaltungen:
EP-A-0 010 539
FR-A-2 352 287

(73) Patentinhaber: Stopinc Aktiengesellschaft, Zuger
Strasse 76a, CH- 6340 Baar (CH)

(72) Erfinder: BLOCK, Franz- Rudolf, Kalfstr. 58, D-5106
Roetgen (DE)
Erfinder: THEISSEN, Wolfgang, In der Herg 21,
D-5102 Würselen (DE)
Erfinder: BASLER, Urs, Sonnenweg 3, CH- 6312
Steinhausen (CH)
Erfinder: PESOVIC, Branislav, Goldermattenstr. 41,
CH- 6312 Steinhausen (CH)

(74) Vertreter: Brückner, Raimund, Dipl.- Ing., c/o
Didier- Werke AG Lessingstrasse 16- 18, D-6200
Wiesbaden (DE)

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 190 178 B1

## Beschreibung

Die Erfindung bezieht sich auf eine Einrichtung zur Füllstandsmessung für mit Metall zu füllende Gefäße, insbesondere Zwischengefäße zum Vergießen von Stahlschmelze in Kokillen, bestehend aus mindestens einer an Wechselstrom anschließbaren und sich in Füllhöhenrichtung erstreckenden Primär- bzw. Sendespule sowie mindestens zwei in Füllhöhenrichtung versetzt zueinander angeordneten Sekundär- bzw. Empfängerspulen, deren in Abhängigkeit des Badspiegelstandes des Metallbades im Gefäß induzierte Wechselspannungen als Eingangssignale für eine Meßwertverarbeitungseinrichtung dienen, wobei die Sende- und Empfängerspulen in der Gefäßwandung so angeordnet sind, daß ihre Achsen nahezu parallel zur Badspiegeloberfläche des Metallbades im Gefäß ausgerichtet sind, wobei die Empfängerspulen von der Sendespule umfaßt sind und zusammen mit ihr in einem Spulenträger eingelegt sind, der mit den Sende- und Empfängerspulen eine in die Gefäßwandung als Bauteil einfügbare Meßeinheit bildet.

Aus der Druckschrift FR-A-2 352 287 ist eine solche Meßeinrichtung bekannt, deren einzelnen Spulen so angeordnet sind, daß die Empfängerspulen vom gleichen Feldfluß der Sendespule beaufschlagt sind.

Außerdem sind die einzelnen Spulen so angeordnet, daß die Sendespule entweder außerhalb oder aber in einem axialen Abstand von den Empfängerspulen entfernt liegt. Dadurch ist die Leistungsfähigkeit und die Meßgenauigkeit der Meßeinrichtung sehr begrenzt.

Aus der Druckschrift EP-A-10 539 ist ferner eine Einrichtung zur Messung des Füllstandes von flüssigem Metall in einer Kokille, die sich aus koaxial zueinander liegenden Sende- und Empfängerspulen zusammensetzt, deren gemeinsame Achse quer zur Badspiegeloberfläche der Metallschmelze in der Kokille ausgerichtet ist. Eine solche Einrichtung ist praktisch nur zum Messen des Füllstandes eines Metallstranges in einer Kokille verwendbar. Sie ist aber für den Einbau seitlich zum Metallbad in die Gefäßwandung eines metallurgischen Gefäßes nicht geeignet.

Aufgabe der vorliegenden Erfindung ist es, die Leistungsfähigkeit und Meßgenauigkeit der eingangs beschriebenen Meßeinrichtung durch eine verbesserte Ausgestaltung und Anordnung der Sende- und Empfängerspulen zu erhöhen.

Diese Aufgabe wird erfindungsgemäß dadurch gelöst, daß die Sendespule und die Empfängerspulen in einer Ebene liegen, und daß die Sendespule einen in Füllhöhenrichtung unterschiedlichen Feldfluß aufweist und die Empfängerspulen in unterschiedlichen Feldflußbereichen der Sendespule angeordnet sind.

Die erfindungsgemäße Meßeinrichtung zeichnet sich durch eine hohe Leistungsfähigkeit aus, weil die beiden Empfängerspulen innerhalb des Magnetfeldes und in einer Ebene mit der Sendespule liegen. Darüberhinaus hat die Meßeinrichtung den Vorteil, daß die Kennlinie, auf der man die Spannungswerte aufnimmt, nahezu linear ansteigend verläuft, was bedeutet, daß mit zunehmender Füllhöhe auch die Stärke des Meßsignals ansteigt.

Die Meßeinrichtung bildet ferner eine Meßeinheit bestehend aus den Sende- und Empfängerspulen und dem Spulenträger aus vorzugsweise feuerfestem Material mit Halte-, Binde-, Verbindungs- oder dgl. Mitteln für die Spulen, die man als vorfabrizierten Bauteil herstellen kann und beim Errichten der Gefäßwandung leicht und mühelos mit wenigen Handgriffen in die feuerfeste Auskleidung des Gefäßes einfügen und vermauern kann. Da die Spulen bereits an der einbaufertigen Meßeinheit funktionell auf das auszurüstende Gefäß abgestimmt sind, ist die Meßeinheit sofort betriebsfertig. Ein mühevolles Einstellen einzelner Spulen in speziellen Lagen in der Gefäßwandung ist hier nicht erforderlich.

Als besonders vorteilhaft hat sich gemäß der Erfindung eine Meßeinheit erwiesen, die aus einem aus blanken Drähten auf Isolatoren gestalteten System aus Sende- und Empfängerspulen, und darum herum gegossenem feuerfestem Material mit elektrisch isolierenden Eigenschaften besteht. Auf diese Weise läßt sich mit einfachen Mitteln eine problemlos in die feuerfeste Auskleidung des Gefäßes einfügbare Baueinheit herstellen, deren Einbau zweckmäßig im Dauerfutter unter Vermittlung von Mineralwolle, leicht lösbarem Mörtel oder dergleichen erfolgt, um ein Separieren der Messeinheit beim Erneuern der Gefässauskleidung zu erleichtern. Als zweckdienlich hat sich auch das Vorgehen bestätigt, einen die Sende- und Empfängerspulen tragenden Rahmen bzw. Formkörper zu verwenden, der aus feuerfestem elektrisch isolierendem Material besteht und Führungsnuten, beispielsweise in Form von Ritzen hat, in die die Spulendrähte eingelegt und mit einem, dem feuerfesten Material gleichwertigen Mörtel zugeschmiert werden können.

Sowohl die Sendespulen als auch die Empfängerspulen können neben einer vorzuziehenden rechteckigen Form auch andere Windungsformen haben. Insbesondere lassen sich zur Erzielung eines unterschiedlichen Feldflusses innerhalb einer Sendespule, was vorzugsweise mit zusätzlichen Nebenwindungen geschieht, zweckdienlich beispielsweise auch dreieckige Windungsformen mit zur Spitze des Dreiecks hin abnehmendem Feldfluß einsetzen.

Die Erfindung ist nachstehend anhand der Zeichnungen an zwei Ausführungsbeispielen veranschaulicht.

Es zeigen:

Fig. 1 schematisch die Regelung des Zuflusses der Stahlschmelze aus einer Giesspfanne in ein Zwischengefäss,

Fig. 2 einen Schnitt durch die Wandung des Zwischengefässes mit eingebauter Messeinheit in grösserem Masstab,

Fig. 3 eine aufgebrochene Messeinheit mit Blick auf das Spulensystem,

Fig. 4 die Seitenansicht zu Fig. 3,

Fig. 5 ein spezielles Ausführungsbeispiel des Spulensystems der Meßeinheit in Explosionsdarstellung,

Fig. 6 eine Kennlinie des Spulensystems nach Fig. 5 und

Fig. 7 das Schaltbild einer Elektronik für eine Messeinheit mit Spulen nach Fig. 5.

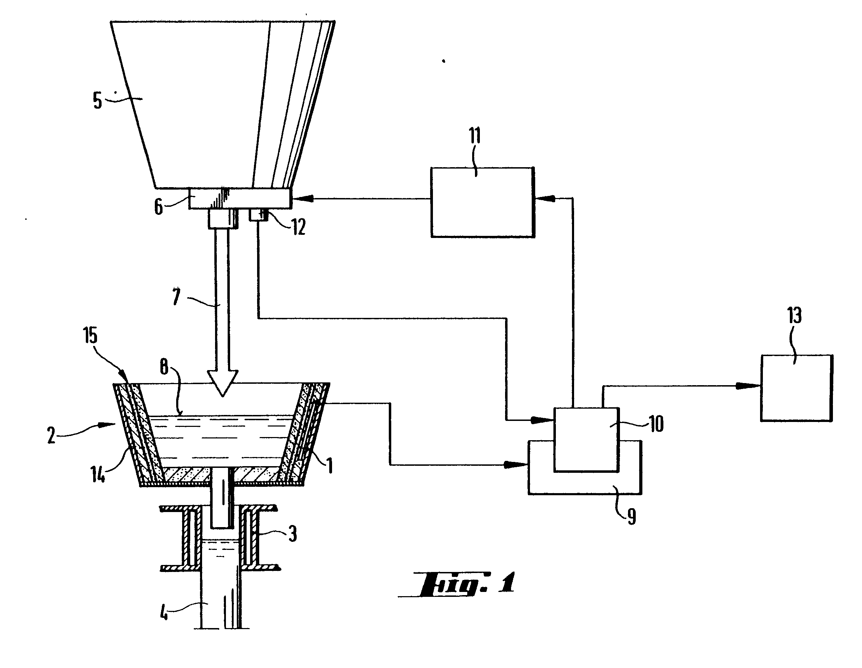

In der Füllstandsmesseinrichtung nach Fig. 1 bedeutet 1 die neue Messeinheit, die an einem Zwischengefäss 2 zum Vergiessen von Stahlschmelze in Kokillen 3 vorgesehen ist, aus denen die erkaltete Schmelze in Form eines Stranges 4 abgezogen wird. Seinerseits erhält das Zwischengefäss 2 die Stahlschmelze aus einer Giesspfanne S. die einen Ausgussverschluss 6 aufweist, der zum Regeln des Giesstrahls 7 in Abhängigkeit der Höhe des Badspiegels 8 im Zwischengefäss 2 dient. Hierzu ist der Messeinheit 1 eine elektronische Messverarbeitungseinrichtung 9 mit einem zugeordneten Rechner 10 nachgeschaltet, der eine mit dem Ausgussverschlus 6 gekoppelte mechanische Regeleinrichtung 11 steuert. Ein Messwertgeber 12 meldet den Grad der Öffnungs- bzw. Schließstellung des Ausgussverschlusses 6 zur Ausvertung an den Rechner 10 zurück, der im weiteren beispielsweise zur Steuerung eines Anzeigegerätes 13, ferner in nicht dargestellter Weise zum Auslösen von Alarmen, zum automatischen Angiessen oder auch zum Steuern des die Stahlgiesspfanne 5 tragenden Schwenkturms oder dergleichen benutzt werden kann.

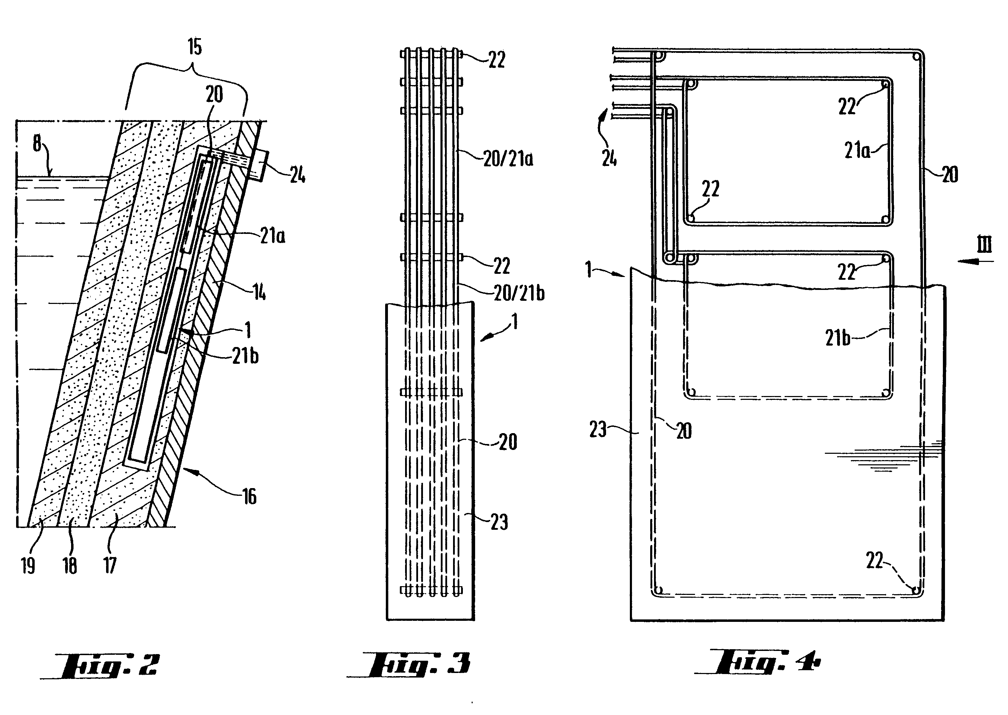

Das Zwischengefäss 2 hat einen äusseren Stahlmantel 14 und eine feuerfeste Auskleidung 15, die gemäss Fig. 2 in der Umfangswandung 16 aus einem an den Stahlmantel 14 anliegenden Dauerfutter 17, einer Sandschicht 18 sowie einem inneren Verschleissfutter 19 besteht. Im Dauerfutter 17 ist die Messeinheit 1 mittels einer nicht dargestellten leicht lösbaren Umfangsschicht eingebettet, so dass ein Schutz bei Abnutzung des Verschleissfutters 19 gegeben und ein müheloser Ausbau möglich ist.

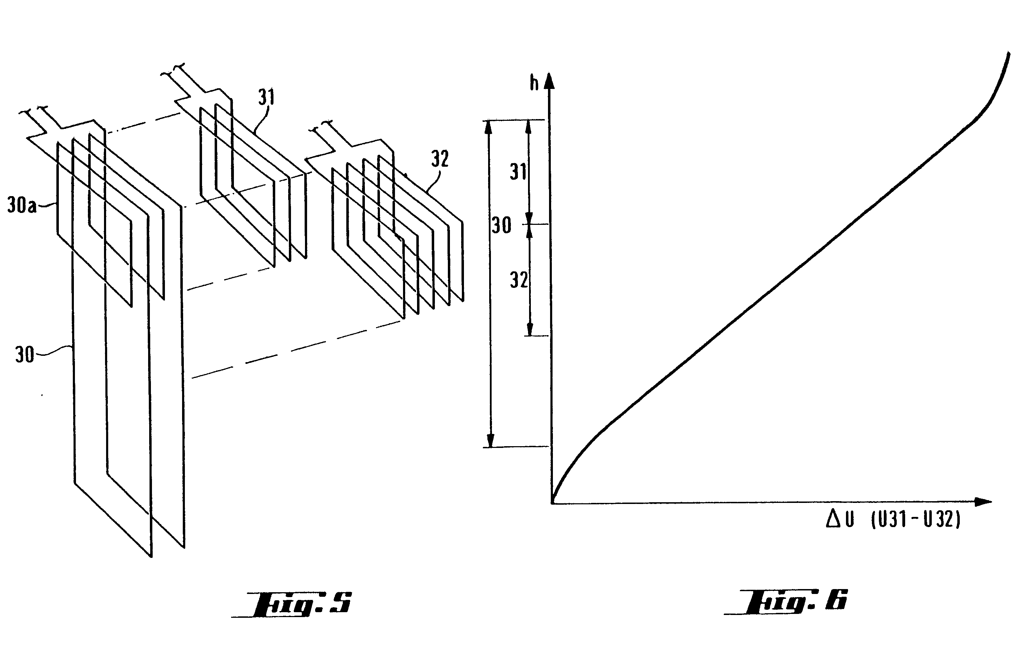

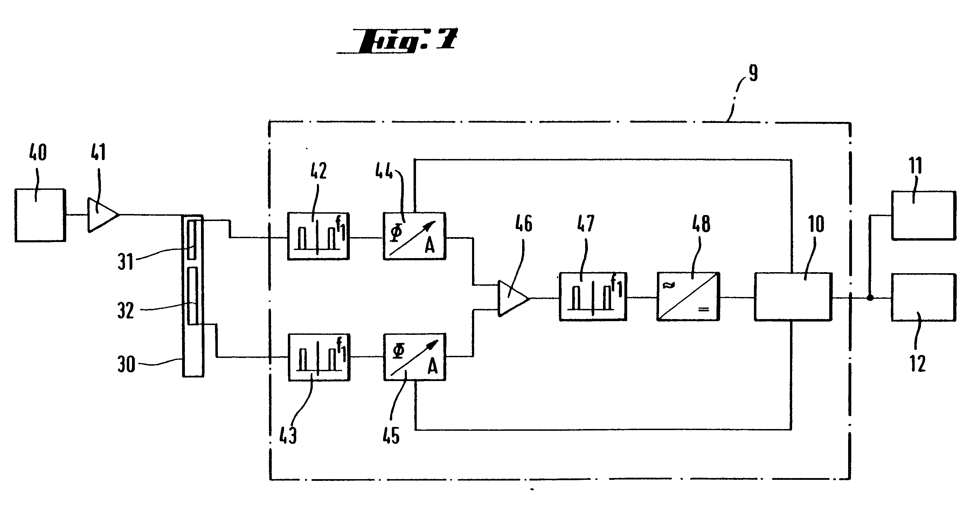

Nach Fig. 2 bis 4 besteht die Messeinheit 1 aus einer Sendespule 20 mit etwa parallel zum Badspiegel 8 gerichteten Achsen und darin in Richtung der Füllhöhe versetzten, d. h. verschiedene Flächenbereiche der Sendespule 20 überdeckenden, Empfängerspulen 21 a, b. Das Spulensystem 20, 21 hat blanke Drähte, die auf Isolatoren 22 zu einem Spulengebilde 20, 21, 22 gewickelt sind, das mit einem feuerfesten, elektrisch nicht leitenden Material 23 umgossen ist, wozu das Spulengebilde 20, 21, 22 bei anschlußgerechter Fassung der Drahtenden 24 in einer Verschalung lösbar befestigt und dann das gießfähige feuerfeste Material 23 eingefüllt wird. Nach Erstarren des Materials 23 kann die fertige, Senden und Empfängerspulen 20, 21 gemeinsam enthaltende Messeinheit 1 ausgeschalt und in einfacher Art an metallurgischen Gefässen bei Erstellung der feuerfesten Auskleidung eingesetzt werden, wobei auch mehrere Einheiten 1 vorgesehen sein können, obwohl in den meisten Fällen die Anordnung einer einzigen, mit einem elektrischen Anschluss 24 in der Umfangswandung 16 des Gefässes 2 gekoppelten Messeinheit genügt.

Die mit dem Spulensystem 20, 21 ausgerüstete Meßeinheit 1 wirkt derart, daß bei leerem Zwischengefäß 2 die Gesamtspannung der Empfängerspulen 21 a, b gleich Null ist, oder mit Hilfe der nachgeschalteten Elektronik auf Null abgeglichen wurde. Steigt der Badspiegel 8 an, so werden entsprechende Spannungen induziert. Statt der eingezeichneten beiden Sekundärspulen kann auch eine größere Zahl von Sekundärspulen verwendet werden. Hierauf wird man insbesondere dann zurückgreifen, wenn "Eichmarken" gemessen werden sollen. Dabei sind Eichmarken speziellen festen Höhen zugeordnete Spannungswerte - in der Regel Nulldurchgänge - die weitgehend unabhängig von der Auswaschung der feuerfesten Zustellung sind. Die zu Eichmarken führenden Spannungen werden aus Linearkombinationen der Beträge der vorzugsweise zuvor abgeglichenen Sekundärspannungen gewonnen.

Eine spezielle Ausführung zum Spulensystem 20, 21 nach Fig. 2 bis 4 stellt das System nach Fig. 5 dar, bei dem die aus zwei Windungen hergestellte, rechteckige Sendespule 30 im oberen Drittel eine Zusatzspule 30a aufweist, in der eine Empfängerspule 31 mit drei Windungen angeordnet ist, während eine zweite Empfängerspule 32 mit fünf Windungen sich in der Mitte der Sendespule 30 befindet. Ausgerüstet mit einem solchen Spulensystem 30, 30a, 31, 32 ergeben sich für die Messeinheit 1 Differenzspannungswerte $\Delta U$ nach der in Fig. 6 dargestellten Kennlinie, die im Höhenbereich der Sendespule 30, innerhalb dessen die Bereiche der Empfängerspulen 31 und 32 liegen, linear ansteigt, was heisst, dass die in den Empfängerspulen 31, 32 induzierte Differenzspannung und damit das Messignal proportional zur Höhe h des Badspiegels 8 verläuft.

Die zur Messeinheit 1 mit einem Spulensystem 30, 31, 32 gehörende Elektronik hat, wie aus Fig. 7 ersichtlich, einen Frequenzgenerator 40, der elektrischen Strom mit der gewünschten Frequenz, die für das Ausführungsbeispiel 10 kHz beträgt, über einen Leistungsverstärker 41 an die Sendespule 30 liefert. In den Empfängerspulen 31 und 32 werden elektrische Spannungen induziert, und zwar einerseits unmittelbar aus den Feldern der Sendespule 30 und andererseits aus den Feldern derjenigen Ströme, die in dem flüssigen Metall oder in der elektrisch leitenden Konstruktion des Zwischengefässes 2 entstanden sind. Die induzierten Spannungen der Empfängerspulen 31 und 32 werden in der Messwertverarbeitungseinrichtung 9 über Filter 42 bzw. 43 sowie Phasenschieber und einstellbare Verstärker 44 bzw. 45 einem Differenzverstärker 46 zugeführt. Das Ausgangssignal des Differenzverstärkers 46 wird nochmals in einem Filter 47 gefiltert und dann in einem Gleichrichter 48 gleichgerichtet. Das gleichgerichtete Signal wird vom Rechner 10 übernommen, der die Regeleinrichtung 11 steuert, die die Höhe des Badspiegels 8 des Zwischengefässes 2 über den Ausgussverschluss 6 der Stahlgiesspfanne 5 beeinflusst.

Vor dem Einfüllen des flüssigen Stahls in das Zwischengefäss 2 werden von der Messwertverarbeitungseinrichtung 9 die beiden in den Empfängerspulen 31, 32 induzierten Spannungen in den Phasenschiebern und Verstärkern 44, 45 gegeneinander auf Null abgeglichen und verstärkt, so dass bei leerem Gefäss 2 der Messwert gleich Null ist. Sobald Stahlschmelze eingefüllt wird, werden von der Messeinheit 1 laufend Spannungswerte an die Messwertverarbeitungseinrichtung 9 geliefert, die einen entsprechenden Istwert der Badspiegelhöhe 8 an den Rechner 10 weitergibt. Dieser vergleicht den Istwert mit einem gespeicherten Sollwert und steuert entsprechend den Ausgussverschluss 6 der Stahlgiesspfanne 5, zwecks Regelung des Zuflusses der Stahlschmelze zum Zwischengefäss 2. Dabei wird die Istposition des Ausgussverschlusses 6, d.h. der Grad seiner Öffnungs- bzw. Schließstellung von dem Messwertgeber 12 erfasst und an den Rechner 10 zur Auswertung zurückgemeldet.

Wenn das Verschleissfutter 19 des Zwischengefässes 2 grossen Abnutzungen ausgesetzt ist können im Rechner 10 ferner Mittel vorgesehen sein, die die entstehenden Änderungen des Abstandes zwischen der Messeinheit 1 und der inneren Wandung des Zwischengefässes 2 und damit mögliche Abweichungen der gemessenen zu den effektiven Badspiegelhöhen bei der Füllstandsmessung mitberücksichtigen. So werden entsprechend der Anordnung der Sekundärspulen beispielsweise sinusförmige Signale zusätzlich erzeugt, deren Nulldurchgänge als Eichmarken dienen, da bei diesen unabhängig von Änderungen des genannten Abstandes die Signalwerte der Badspiegelhöhen gleich bleiben. Anhand dieser Eichmarken können Änderungen des genannten Abstandes vom Rechner 10 erfasst und entsprechend Korrekturwerte gebildet werden, mit denen sich dann die effektiven Badspiegelhöhen bestimmen lassen.

## Patentansprüche

1. Einrichtung zur Füllstandsmessung für mit Metall zu füllende Gefäße, insbesondere Zwischengefäße zum Vergießen von Stahlschmelze in Kokillen, bestehend aus mindestens einer an Wechselstrom anschließbaren und sich in Füllhöhenrichtung erstreckenden Primär- bzw. Sendespule (20, 30) sowie mindestens zwei in Füllhöhenrichtung versetzt zueinander angeordneten Sekundär- bzw. Empfängerspulen (21, 31, 32), deren in Anhängigkeit des Badspiegelstandes des Metallbades im Gefäß induzierte Wechselspannungen als Eingangssignale für eine Meßwertverarbeitungseinrichtung (9) dienen, wobei die Sende- und Empfängerspulen (20, 30 bzw. 21, 31, 32) in der Gefäßwandung (17) so angeordnet sind, daß ihre Achsen nahezu parallel zur Badspiegeloberfläche des Metallbades im Gefäß ausgerichtet sind, wobei die Empfängerspulen (21, 31, 32) von der Sendespule (20, 30) umfaßt sind und zusammen mit ihr in einem Spulenträger (23) eingelegt sind, der mit den Sende- und Empfängerspulen (20, 30 bzw. 21, 31, 32) eine in die Gefäßwandung (17) als Bauteil einfügbare Meßeinheit (1) bildet, dadurch gekennzeichnet, daß die Sendespule (20, 30) und die Empfängerspulen (21, 31, 32) in einer Ebene liegen, und daß die Sendespule (20, 30) einen in Füllhöhenrichtung unterschiedlichen Feldfluß aufweist und die Empfängerspulen (21, 31, 32) in unterschiedlichen Feldflußbereichen der Sendespule angeordnet sind.

2. Einrichtung nach Anspruch 1, dadurch gekennzeichnet, dass die Messeinheit (1) aus einem aus blanken Drähten auf Isolatoren (22) gestaltetem System aus Sende- und Empfängerspulen (20, 21a, b) und darum herumgegossenem feuerfestem Material (23) mit elektrisch isolierenden Eigenschaften besteht.

3. Einrichtung nach Anspruch 1, daurch gekennzeichnet, dass als Messeinheit (1) ein aus feuerfestem, elektrisch isolierendem Material bestehender Rahem bzw. Formkörper mit die Drähte des Spulensystems aufweisenden Führungsnuten dient.

4. Einrichtung nach den Ansprüchen 2 und 3, dadurch gekennzeichnet, dass die Messeinheit (1) unter Vermittlung von leicht lösbaren Stoffen in das Daurfutter (17) des metallurgischen Gefässes eingefügt ist.

5. Einrichtung nach den Ansprüchen 1 bis 4, dadurch gekennzeichnet, daß an die Sendespule eine Wechselspannung im 10 kHz-Bereich gelegt wird.

6. Einrichtung nach einem der Ansprüche 1 - 5, dadurch gekennzeichnet, dass die Messeinheit (1) eine Sendespule (30) mit im Bereich des optimalen Standes des Badspiegels (8) stärkeren Feldfluss hat und dem geringeren und stärkeren Feldflussbereich je eine Empfängerspule (31, 32) mit unterschiedlichen Windungszahlen zugeordnet ist.

7. Einrichtung nach einem der Ansprüche 1 bis 6, dadurch gekennzeichnet, dass die Sendespule (30) mit den stärkeren Feldfluss bewirkenden Nebenwindungen (30a), Windungsprofilen oder dergleichen ausgestattet ist.

8. Einrichtung nach Anspruch 1, dadurch gekennzeichnet dass im Rechner (10) der Messwertverarbeitungseinrichtung (9) die Eingangssignale gespeichert, Eichmarken für bestimmte Badspiegelhöhen und Korrekturwerte für die Ausgangssignale gebildet sind, um den Verschleiss des Verschleissfutters (19) des Zwischengefässes (2) und damit Änderungen des Abstandes zwischen dem Bad und der Messeinheit (1) mitzuberücksichtigen.

9. Einrichtung nach Anspruch 1 und 8, dadurch gekennzeichnet, daß die Zahl der Sekundärspulen oder Linearkombinationen aus Signalen der Sekundärspulen so erhöht wird, daß alleine die Information, ob die einzelnen Eichmarken überschritten sind, mit genügender Genauigkeit die Badhöhe festlegt.

## Claims

1. Device for the measurement of the filling level of vessels to be filled with metal, particularly intermediate vessels for casting steel melt into moulds, comprising at least one primary or transmitting coil (20, 30) which may be connected to alternating current and extends in the direction of the filling height and at least two secondary or receiving coils (21, 31, 32) which are arranged offset from one another in the direction of the filling height and whose alternating voltages induced in dependence on the height of the liquid surface of the metal bath in the vessel are used as input signals for a measured value processing device (9), the transmitting and receiving coils (20, 30 and 21, 31, 32) being so arranged in the vessel wall (17) that their axes are aligned substantially parallel to the liquid surface of the metal bath in the vessel, the receiving coils (21, 31, 32) being surrounded by the transmitting coil (20, 30) and being inserted with it in a coil carrier (23) which together with the transmitting and receiving coils (20, 30 and 21, 31, 32) forms a measuring unit (1) which may be inserted as an assembly into the vessel wall (17), characterised in that the transmitting coil (20, 30) and the receiving coils (21, 31, 32) lie in a plane and that the transmitting coil (20, 30) has a differing field flux in the direction of the filling height and the receiving coils (21, 31, 32) are arranged in differing field flux regions of the transmitting coil.

2. Device as claimed in Claim 1, characterised in that the measuring unit (1) comprises a system constructed from naked wires on insulators (22) of transmitting and receiving coils (20, 21a, b) and refractory material (23) cast around it with electrically insulating properties.

3. Device as claimed in Claim 1, characterised in that the measuring unit (1) is a frame or moulded body comprising refractory, electrically insulating material with guide grooves having the wires of the coil system.

4. Device as claimed in Claims 2 and 3, characterised in that the measuring unit (1) is inserted into the permanent lining (17) of the metallurgical vessel with the interposition of readily removable materials.

5. Device as claimed in Claims 1 to 4, characterised in that an alternating voltage in the 10 kHz range is applied to the transmitting coil.

6. Device as claimed in one of Claims 1 to 5, characterised in that the measuring unit (1) has a transmitting coil (30) with a stronger field flux in the region of the optimum level of the liquid surface (8) and associated with the weaker and stronger field flux region is a respective receiving coil (31, 32) with different numbers of windings.

7. Device as claimed in one of Claims 1 to 6, characterised in that the transmitting coil (30) is provided with subsidiary windings (30a), winding profiles or the like which produce the stronger field flux.

8. Device as claimed in Claim 1, characterised in that in the computer (10) of the measured value processing device (9) the input signals are stored and calibration marks for certain liquid surface levels and correction values for the output signals are produced in order to take account of the wear of the wear lining (19) of the intermediate vessel (2) and thus of changes in the spacing between the bath and the measuring unit (1).

9. Device as claimed in Claims 1 and 8, characterised in that the number of the secondary coils or linear combinations of signals from the secondary coils is so increased that merely the information whether the individual calibration marks have been passed determines the height of the bath with sufficient accuracy.

## Revendications

1. Dispositif de mesure du niveau de remplissage pour récipients à remplir de métal, en particulier récipients intermédiaires pour couler de l'acier fondu dans des coquilles, se composant d'au moins une bobine primaire ou émettrice (20, 30), susceptible d'être raccordée à un courant alternatif et s'étendant dans le sens de la hauteur du remplissage, ainsi que d'au moins deux bobines secondaires ou réceptrices (21, 31, 32), disposées de manière décalée l'une par rapport à l'autre dans le sens de la hauteur du remplissage, dont les tensions alternatives induites en fonction de la position du niveau du bain métallique dans le récipient servent de signaux d'entrée à un dispositif de traitement des mesures (9), les bobines émettrices et réceptrices (20, 30 ou 21, 31, 32) étant disposées dans la paroi du récipient (17) de telle façon que leurs axes sont orientés à peu près parallèlement à la surface du niveau du bain métallique dans le récipient, les bobines réceptrices (21, 31, 32) étant entourées par la bobine émettrice (20, 30) et introduites ensemble avec celle-ci dans un support de bobines (23) qui forme avec les bobines émettrice et réceptrices (20, 30 ou 21, 31, 32) une unité de mesure (1) insérable comme partie structurelle dans la paroi (17) du récipient, caractérisé en ce que la bobine émettrice (20, 30) et les bobines réceptrices (21, 31, 32) sont situées dans un plan et en ce que la bobine émettrice (20, 30) présente un flux de champ variable dans le sens de la hauteur de remplissage et les bobines réceptrices (21, 31, 32) sont disposées dans des zones différentes de flux de champ de la bobine émettrice.

2. Dispositif selon la revendication 1, caractérisé en ce que l'unité de mesure (1) consiste en un système formé à partir de fils nus placés sur des isolateurs (22), système se composant de bobines émettrice et réceptrices (20, 21a, b) et en un matériau (23) résistant au feu, électriquement isolant, coulé autour.

3. Dispositif selon la revendication 1, caractérisé en ce qu'un cadre ou un corps formé en matériau résistant au feu, isolant électriquement, avec des gorges de guidage présentant les fils du système de bobines, sert d'unité de mesure (1).

4. Dispositif selon les revendications 2 et 3, caractérisé en ce que l'unité de mesure (1) est introduite par l'intermédiaire de matières facilement enlevables dans le revêtement durable (17) du récipient métallurgique.

5. Dispositif selon les revendications 1 à 4, caractérisé en ce qu'une tension alternative de fréquence située dans la zone de 10 kHz est appliquée à la bobine émettrice.

6. Dispositif selon l'une quelconque des revendications 1 à 5, caractérisé en ce que l'unité de mesure (1) présente une bobine émettrice (30) avec un flux de champ plus fort dans la zone de la position optimale du niveau du bain (8) et en ce que des bobines réceptrices (31, 32) à nombres de spires différents sont respectivement affectée à la zone du flux de champ plus faible et à celle du flux de champ plus fort.

7. Dispositif selon l'une quelconque des revendications 1 à 6, caractérisé en ce que la bobine émettrice (30) ayant les enroulements annexes (30a) provoquant le flux de champ plus fort est munie de profilés de spires ou similaires.

8. Dispositif selon la revendication 1, caractérisé en ce que les signaux d'entrée sont mis en mémoire dans le calculateur (10) du dispositif de traitement des mesures (9), des marques d'étalonnage sont formées pour des hauteurs de niveau de bain déterminées et des valeurs de correction sont formées pour les signaux de sortie, pour prendre en considération l'usure du revêtement d'usure (19) du récipient intermédiaire (2) et ainsi les modifications de la distance entre le bain et l'unité de mesure (1).

9. Dispositif selon la revendication 1 et 8, caractérisé en ce que le nombre de bobines secondaires ou de combinaisons linéaires de signaux des bobines secondaires est si élevé que seule l'information selon laquelle les marques d'étalonnage individuelles sont dépassées détermine avec une précision suffisante la hauteur de bain.

**Fig. 1**

EP 0 190 178 B1

Fig. 4.

Fig. 3.

Fig. 2.

Fig. 6

Fig. 5

$\Delta U \ (U31 - U32)$

Fig. 7

EP 0 190 178 B1